# EUROPEAN PATENT SPECIFICATION

(11) **EP 2 001 149 B1**
(45) Date of publication and mention of the grant of the patent: **11.07.2018**
(21) Application number: 08103252.6
(22) Date of filing: 31.03.2008
(51) Int. Cl.: H04H 20/63, H04H 20/08, H04H 60/80

(54) **Broadcast receiver**
Rundfunkempfänger
Récepteur de diffusion

(30) Priority: 04.06.2007 KR 20070054589
(43) Date of publication of application: 10.12.2008
(73) Proprietor: Samsung Electronics Co., Ltd., Gyeonggi-do 16677 (KR)
(72) Inventor: Jung, Seok-min, Gyeonggi-do (KR)
(74) Representative: Hewett, Jonathan Michael Richard

(56) References cited:
- EP-A2- 1 164 790
- EP-A2- 1 458 195
- EP-A2- 1 717 996
- US-A1- 2004 097 246
- US-A1- 2004 261 112
- US-A1- 2005 009 539
- US-A1- 2006 270 347

## Description

The present invention relates to a broadcast receiver, and particularly, but not exclusively, to a broadcast receiver which processes and outputs broadcast contents including audio/video signals and broadcast contents including only audio signals, and a method of controlling such a broadcast receiver.

In general, a broadcasting receiving apparatus such as a television (TV) set, a set top box, etc. is referred to as a video display terminal which receives broadcasting channel signals transmitted from a plurality of broadcasting stations, and displays the broadcasting channel signals by image data. As a broadcasting channel signal also includes a cable broadcasting signal and a satellite broadcasting signal, users may watch a wide variety of broadcasts in addition to ground-wave broadcasts. As broadcast contents are diversified, contents for music broadcasting which provide only audio signals without video signals increase.

However, it is not easy for the users to access to contents providing only audio signals with a broadcasting receiving apparatus such as a TV set which receives mainly video signals.

As a related art broadcasting receiving apparatus such as a TV set or a set top box includes an internal/external speaker or a wired/wireless headset, it is capable of processing and outputting an audio signal of broadcasting contents as a sound. However, the broadcasting receiving apparatus primarily outputs a sound corresponding to a current main screen being displayed, and thus options for various contents including a content containing only audio signal and another content are limited.

United States Patent Application No. US 2004/0261,112 discloses a broadcast receiver comprising: a signal receiving unit for receiving a first signal and a second signal; a communication unit arranged to communicate with an external device; and a signal processing unit arranged to process and output the first signal if the first signal includes a video signal, and to process the second signal and provide it to the communication unit for transmission to the external device if the second signal includes only an audio signal. United States Patent Application No. US 2006/270347 discloses a method and system for routing FM audio data to a Bluetooth®-enabled device.

According to a first aspect of the present invention, there is provided a broadcast receiver according to claim 1.

According to a second aspect of the present invention, there is provided a method of controlling a broadcast receiver according to claim 9.

Optional features are set out in the dependent claims.

The above and/or other aspects of the present invention will become apparent and more readily appreciated from the following detailed description of the embodiments, taken in conjunction with the accompanying drawings, in which:
Figure 1 is a control block diagram of a broadcasting receiving apparatus according to an embodiment of the present invention;
Figure 2 is a control block diagram of a broadcasting receiving apparatus according to another embodiment of the present invention;
Figure 3 illustrates the broadcasting receiving apparatus according to the embodiment of the present invention;
Figure 4 is a flow chart of the broadcasting receiving apparatus according to an embodiment of the present invention; and
Figure 5 is a flow chart of a broadcasting receiving apparatus according to another embodiment of the present invention.

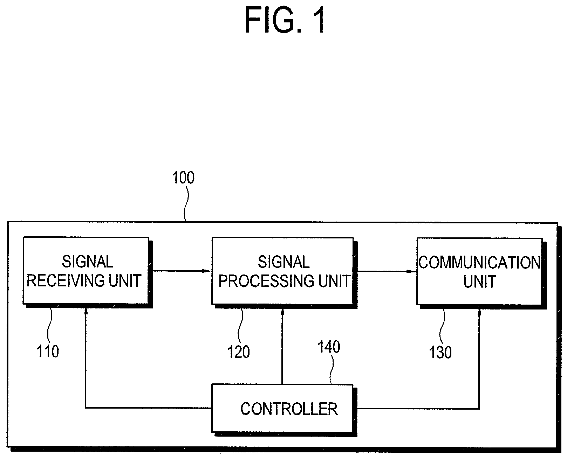

The present invention is applicable to a broadcasting receiving apparatus such as a set top box, a digital TV, etc. which is capable of receiving broadcasting. Referring to Figure 1, a broadcasting receiving apparatus 100 includes a signal receiving unit 110, a signal processing unit 120, a communication unit 130 and a controller 140 to control the foregoing components.

audio signal of the second broadcast signal corresponding to one of the channels selected by a command input by the user through the input unit to the external device.

According to an aspect of the invention, the broadcasting receiving apparatus further includes a storage unit which stores information on a channel of the second broadcast signal which includes only the audio signal.

According to an aspect of the invention, the controller controls the signal processing unit and the communication unit to transmit the audio signal of the second broadcast signal corresponding to one of the channels selected by the command input by the user through the input unit with reference to the information on the channel stored in the storage unit to the external device.

According to an aspect of the invention, the controller controls the signal processing unit and the communication unit to transmit the audio signal of the second broadcast signal corresponding to one of channels selected by a command input by a user to the external device if the command of the user is input from the external device through the communication unit.

According to an aspect of the invention, the broadcasting receiving apparatus further includes a display, wherein the controller controls the signal processing unit to generate a selection screen where the user inputs a command and to display it on the display.

According to an aspect of the invention, the broadcasting receiving apparatus further includes a display, wherein the controller controls the signal processing unit and the communication unit to process the video signal of the first broadcast signal to be displayed on the display and to process the audio signal of the second broadcast signal to be transmitted to the external device if the first broadcast signal includes the video signal and the second broadcast signal includes only the audio signal.

According to an aspect of the present invention, there is provided a control method of a broadcasting receiving apparatus including: receiving a first broadcast signal and a second broadcast signal; processing and outputting the first broadcast signal, and processing and transmitting the second broadcast signal to an external device, if the first broadcast signal comprises a video signal, and the second broadcast signal includes only an audio signal.

According to an aspect of the invention, the processing the audio signal of the second broadcast signal includes transmitting the audio signal to the external device through a Bluetooth module.

According to an aspect of the invention, the respective broadcast signal corresponds to one of a plurality of channels, the control method further including receiving a command from a user and transmitting the audio signal of the second broadcast signal corresponding to one of the channel selected by the command from the user to the external device.

According to an aspect of the invention, the control method further includes storing information on a channel of the second broadcast signal which includes only the audio signal.

According to an aspect of the invention, the processing the audio signal of the other of the broadcast signals includes transmitting the audio signal of the second broadcast signal corresponding to a channel selected by a command from a user with reference to the stored information on the channel to the external device. According to an aspect of the invention, the control method further includes receiving a command of a user from the external device, and transmitting the audio signal of the second broadcast signal corresponding to one channel selected by the command of the user to the external device.

According to an aspect of the invention, the control method further includes generating a selection screen where a user inputs a command, and transmitting the audio signal of the second broadcast signal corresponding to one channel selected by the command of the user to be transmitted to the external device.

According to an aspect of the invention, the generating the selection screen includes displaying the selection screen on a display.

According to an aspect of the invention, the receiving the broadcast signals includes receiving the first broadcast signal which includes the video signal and the second broadcast signal which includes only the audio signal, and processing the video signal of the first broadcast signal to be displayed on a display and processing the audio signal of the second broadcast signal to be transmitted to the external device.

The above and/or other aspects of the present invention will become apparent and more readily appreciated from the following detailed description of the embodiments, taken in conjunction with the accompanying drawings, in which:
Figure 1 is a control block diagram of a broadcasting receiving apparatus according to an embodiment of the present invention;

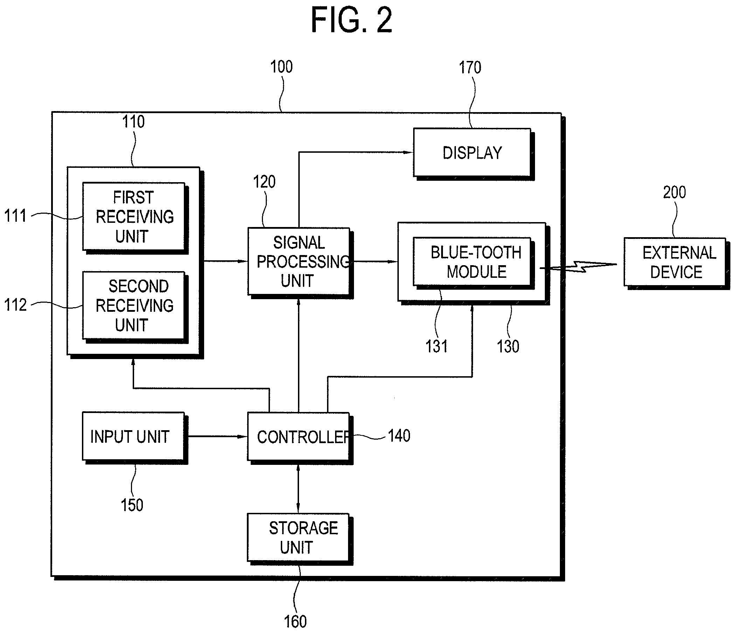

Figure 2 is a control block diagram of a broadcasting receiving apparatus according to another embodiment of the present invention;

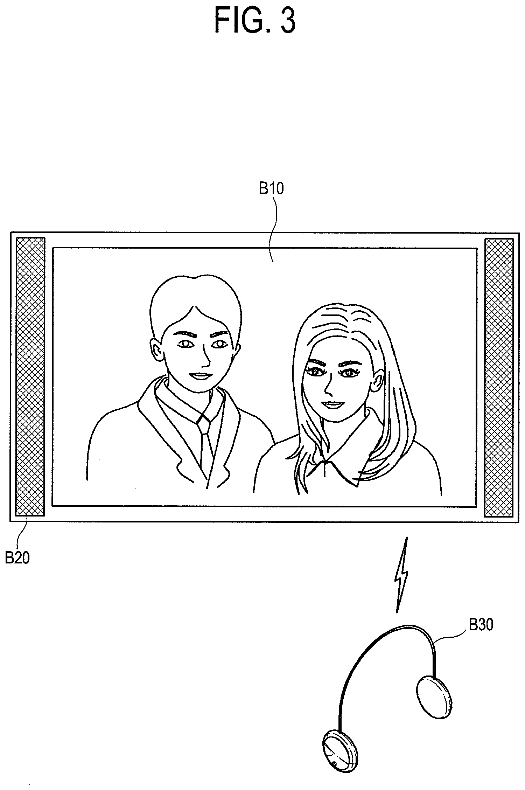

Figure 3 illustrates the broadcasting receiving apparatus according to the embodiment of the present invention;

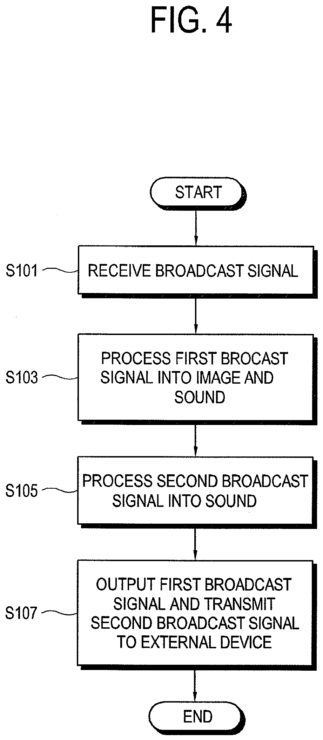

Figure 4 is a flow chart of the broadcasting receiving apparatus according to an embodiment of the present invention; and

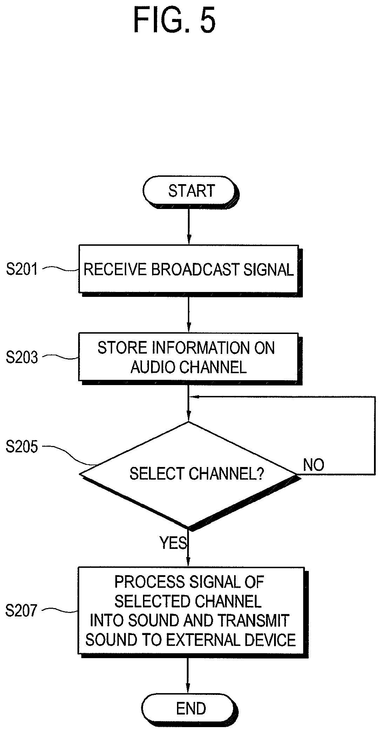

Figure 5 is a flow chart of a broadcasting receiving apparatus according to another embodiment of the present invention.

The present invention is applicable to a broadcasting receiving apparatus such as a set top box, a digital TV, etc. which is capable of receiving broadcasting. Referring to Figure 1, a broadcasting receiving apparatus 100 includes a signal receiving unit 110, a signal processing unit 120, a communication unit 130 and a controller 140 to control the foregoing components.

The signal receiving unit 110 receives signals from the outside and may be provided as a tuner (not shown) and an audio/video (A/V) receiver (not shown).

The tuner tunes a broadcast signal received via an antenna to one of broadcast channels. The tuner converts the tuned broadcast signal to an intermediate frequency signal, demodulates the converted signal, corrects an error from the demodulated signal, and then restores the broadcast signal to a transport stream. Then, the tuner transmits the broadcast signal to the signal processing unit 120. The A/V receiver receives video and audio signals from a video player, e.g., a camcorder, a digital versatile disk (DVD) player, etc., and transmits the signals to the signal processing unit 120.

The signal processing unit 120 includes a demultiplexer (not shown) to separate the video and audio signals transmitted from the signal receiving unit 110, a video signal processor (not shown) to process the video signal, and an audio signal processor (not shown) to process the audio signal.

The video signal processor performs a decoding process to extract information on an image encoded in a video signal, and outputs the extracted image information to be visible on a display to a user.

The audio signal processor decodes the audio signal extracted by the demultiplexer, processes it to be audible to the user through a speaker, and transmits it to the communication unit 130. Here, the audio signal processor includes a first audio signal processor (not shown) and a second audio signal processor (not shown). The second audio signal processor may decode a broadcast signal which includes only an audio signal while the first signal processor process an audio signal of a broadcast signal which includes both video and audio signals.

The communication unit 130 communicates with an external device to output the audio signal transmitted from the audio signal processor. Here, the external device for the audio signal output may be provided as a speaker, a head phone and a Bluetooth headset.

The communication unit 130 according to the present embodiment includes a Bluetooth module which communicates with a Bluetooth headset.
The Bluetooth module converts the audio signal decoded in the audio signal processor into a high-frequency signal and transmits it through a transmitting antenna. Here, as Bluetooth uses a frequency of 2.4 GHz, the Bluetooth module converts the decoded audio signal according to a Bluetooth communication protocol into a signal with a frequency of 2.4 GHz and transmits the signal.
The controller 140 controls the signal processing unit 120 to decode the audio signal of the broadcast signal received through the signal receiving unit 110 and to transmit the decoded signal to the communication unit 130.

For example, if a broadcast signal which includes only an audio signal such as music broadcasting is received through the signal receiving unit 110, the controller 140 controls the signal processing unit 120 and the communication unit 130 to process the broadcast signal and to transmit it to an external Bluetooth headset through the Bluetooth module.

Referring to Figure 2, the broadcasting receiving apparatus 100 may further include an input unit 150, a storage unit 160 and a display 170.

If a command is input by a user through the input unit 150, the controller 140 controls the signal processing unit 120 and the communication unit 130 to process a broadcast signal which includes only an audio signal among received broadcast signals and to output it according to the command.

For example, if a user inputs a command to output an audio signal through the input unit 150 which is provided as a button on the broadcasting receiving apparatus 100, a remote controller, etc., the controller 140 controls the signal processing unit 120 and the communication unit 130 to process a broadcast signal which includes only an audio signal among broadcast signals received through the signal receiving unit 110 and to output the processed audio signal.

Here, the signal receiving unit 110 according to an embodiment of the present invention includes a first receiving unit 111 and a second receiving unit 112. For example, a user selects a channel corresponding to a TV broadcast signal which the user wants to watch through the input unit 150. Then, the controller 140 inputs a control signal to the first receiving unit 111 according to the selection of the channel. The first receiving unit 111 selects the channel signal, which is set up by the user, among a plurality of TV broadcast channel signals input via an antenna, and separates the selected channel signal into audio and video signals to be transmitted, respectively.

The audio signal of the TV broadcast signals received by the first receiving unit 111 is demodulated to be applied to the audio signal processor (not shown). Here, the audio signal processor processes the audio signal to have an audible frequency, and applies it to a speaker so that a sound of the selected channel is output through the speaker B20, as shown in Figure 3.

The video signal of the TV broadcast signals received by the first receiving unit 111 is applied to the video signal processor (not shown). Here, the video signal processor processes and applies the video signal to be displayable on the display. Then, as shown in Figure 3, an image of the selected channel is output through the display B10.

Here, if another user selects an output of an audio signal through the input unit 150, the controller 140 selects a channel signal which includes only an audio signal through the second receiving unit 112, and controls the signal processing unit 120 and the communication unit 130 to process and output the audio signal of the selected channel.

The controller 140 may control the signal processing unit 120 to generate a selection screen and to display it on the display 170 so that the user selects an output of an audio signal.

The storage unit 160 may store information on a channel of a broadcast signal, which includes only an audio signal, as a channel list. Accordingly, if the user selects an output of an audio signal while a broadcast signal displayed on the main screen is received through the first receiving unit 111, the controller 140 controls the second receiving unit 112 to select one of channels stored in the storage unit 160.

The controller 140 may receive a command to output an audio signal through the communication unit 130. In another embodiment of the present invention, if a user inputs a command to change a channel of an audio signal or to output an audio signal through the Bluetooth module 131, the controller 140 controls the second receiving unit 112 to select one channel on the basis of the channel list stored in the storage unit 160, and the signal processing unit 120 and the communication unit 130 to process and output the input audio signal to the Bluetooth module 131.

Here, referring to Figure 3, an audio signal selected by a user through the communication unit 130 may be transmitted to the Bluetooth headset through the Bluetooth module (B30).

Hereinafter, an operation of the broadcasting receiving apparatus 100 according to the present embodiment will be explained with reference to Figures 4 and 5.

First, a broadcast signal is received through the signal receiving unit 110 (S101). Here, the controller 140 controls the first signal processor to process a first broadcast signal which includes a video signal and an audio signal (S103), and the second signal processor to process a second broadcast signal which includes only an audio signal (S105).

The controller 140 controls the broadcast receiver 100 to output an image and a sound of the first broadcast signal and transmits an audio signal of the second broadcast signal to the external device 200 through the communication unit 130 as a sound (S107) at the same time.

For example, the controller 140 controls the communication unit 130 to transmit a signal which includes only an audio signal to the external apparatus 200, e.g., the Bluetooth headset, while outputting another audio signal corresponding to a video signal, which is displayed on the display 170 of the broadcasting receiving apparatus 100, to the speaker or the like as a sound.

In a further embodiment of the present invention, a broadcast signal is received by the signal receiving unit 110 (S201).

Here, the controller 140 controls the storage unit 160 to store information on an audio channel, which includes only an audio signal among the received broadcast signals, as a channel list (S203).

If a signal to select an audio channel is input through the input unit 150 and the communication unit 130 (S205), the controller 140 controls the signal receiving unit 110 to select an audio channel on the basis of the channel list stored in the storage unit 160, and the signal processing unit 120 and the communication unit 130 to process a broadcast signal of the received channel into a sound and to transmit it to the external apparatus 200 (S207).

Here, the communication unit may be realized as a Bluetooth module 131. The user may input signals to select and change an audio channel through the Bluetooth module 131 from the outside, separately from a broadcast channel which is received by the first receiving unit 111 and displayed on the display 170, and may receive a sound of the audio channel through the Bluetooth headset.

As described above, the embodiments of the present invention provide a broadcasting receiving apparatus which searches, stores and manages channels which transmit only audio signals such as music broadcasting but do not transmit combined audio and video signals to constitute a main screen of the broadcasting receiving apparatus so as to output the audio signals to an external device such as earphones connected to the broadcasting receiving apparatus or a Bluetooth headphone, and a control method thereof.

Further, the present invention also provides a broadcasting receiving apparatus that allows a user to receive one type of contents while another user is receiving another type of contents through a main screen of the broadcasting receiving apparatus, and a control method thereof.

Thus, a user may listen to audio contents without an additional device to play a sound and select the audio contents using Bluetooth or the like from a long distance.

Although a few embodiments of the present invention have been shown and described, it will be appreciated by those skilled in the art that changes may be made in these embodiments without departing from the principles of the invention, the scope of which is defined in the appended claims.

## Claims

1. A broadcast receiver (100) comprising:
a display unit which displays an image;
a sound output unit which outputs a sound;
a signal receiving unit (110) which comprises a first receiving unit (111) for receiving a first broadcast signal and a second receiving unit (112) for receiving a second broadcast signal;
a communication unit (130) arranged to communicate with an external device; and
a signal processing unit (120) arranged to process a video signal and a first sound signal which are contained in the first broadcast signal such that the display unit displays the image based on the processed video signal and the sound output unit outputs the sound based on the processed first sound signal, and to process a second sound signal which is contained in the second broadcast signal and provide the processed second sound signal to the communication unit (130) for transmission to the external device (200) if the second broadcast signal includes only a sound signal, while the video signal and the first sound signal which are contained in the first broadcast signal are processed, the image is displayed on the display unit and the sound is output by the sound output unit.

2. The receiver according to claim 1, wherein the signal processing unit (120) comprises a first signal processor which processes the first signal and a second signal processor which processes the second signal.

3. The receiver according to claim 1 or claim 2, wherein the communication unit (130) comprises a Bluetooth module (131).

4. The receiver according to any one of the preceding claims, further comprising an input unit (150) through which a command from a user is input,
wherein by the command, a second channel corresponding to the second signal is selected for the signal receiving unit (110) to receive the second signal, and the controller controls the signal processing unit (120) and the communication unit (130) to process the second signal to be transmitted to the external device (200).

5. The receiver according to claim 4,
wherein a controller (140) is arranged to control the signal processing unit (120) is arranged to generate a selection screen on the display,
wherein the selection screen indicates that the second channel corresponds to the second signal, and
wherein the selection screen allows the user to input the command to select the second channel to receive the second signal.

6. The receiver according to claim 4 or claim 5, further comprising a storage unit (160) which stores information on the second channel, wherein the second signal is provided through the second channel.

7. The receiver according to claim 6, wherein the second channel is selected by the command with reference to the information on the second channel stored in the storage unit (160).

8. The receiver according to any one of the preceding claims,
wherein in response to an input command, a controller (140) is arranged to control the first receiving unit to select a first channel to receive the first signal, or the second receiving unit to select a second channel to receive the second signal.

9. A method of controlling a broadcast receiver (100) having a display unit which displays an image and a sound output unit which outputs a sound, the method comprising:
receiving a first broadcast signal and a second broadcast signal;
processing a video signal and a first sound signal which are contained in the first broadcast signal such that the display unit displays the image based on the processed video signal and the sound output unit outputs the sound based on the processed first sound signal, and processing a second sound signal which is contained in the second broadcast signal and providing the processed second sound signal to the communication unit (130) for transmission to the external device (200) if the second broadcast signal includes only a sound signal, while the video signal and the first sound signal which are contained in the first broadcast signal are processed, the image is displayed on the display unit and the sound is output by the sound output unit.

10. The control method according to claim 9, wherein the second signal is transmitted to the external device through a Bluetooth module (131).

11. The control method according to claim 9, further comprising receiving a command from a user, wherein a second channel corresponding to the second signal is selected by the command to receive the second signal, and the second signal is processed and transmitted to the external device.

12. The control method according to claim 11, further comprising storing information on the second channel, wherein the second signal is provided through the second channel.

13. The control method according to claim 11 or claim 12, further comprising generating a selection screen on the display (B10) of the broadcasting receiving apparatus,
wherein the selection screen indicates that the second channel corresponds to the second signal, and
wherein the selection screen allows the user to input the command to select the second channel to receive the second signal.

14. The control method according to claim 13, wherein the second channel is selected by the command with reference to the stored information on the second channel.

## Patentansprüche

1. Rundsendungsempfänger (100), der Folgendes umfasst:
eine Anzeigeeinheit, die ein Bild anzeigt,
eine Tonausgabeeinheit, die einen Ton ausgibt,
eine Signalempfangseinheit (110), die eine erste Empfangseinheit (111) zum Empfangen eines ersten rundgesendeten Signals und eine zweite Empfangseinheit (112) zum Empfangen eines zweiten rundgesendeten Signals umfasst,
eine Kommunikationseinheit (130), die so eingerichtet ist, dass sie mit einer externen Vorrichtung kommuniziert, und
eine Signalverarbeitungseinheit (120), die so eingerichtet ist, dass sie ein Videosignal und ein erstes Tonsignal, die in dem ersten rundgesendeten Signal enthalten sind, so verarbeitet, dass die Anzeigeeinheit das Bild auf der Grundlage des verarbeiteten Videosignals anzeigt und die Tonausgabeeinheit den Ton auf der Grundlage des verarbeiteten ersten Tonsignals ausgibt, und ein zweites Tonsignal, das in dem zweiten rundgesendeten Signal enthalten ist, verarbeitet und das verarbeitete zweite Tonsignal für die Kommunikationseinheit (130) zum Übertragen zu der externen Vorrichtung (200) bereitstellt, wenn das zweite rundgesendete Signal nur ein Tonsignal enthält, während das Videosignal und das erste Tonsignal, die in dem ersten rundgesendeten Signal enthalten sind, verarbeitet werden, das Bild auf der Anzeigeeinheit angezeigt und der Ton von der Tonausgabeeinheit ausgegeben wird.

2. Empfänger nach Anspruch 1, wobei die Signalverarbeitungseinheit (120) einen ersten Signalprozessor, der das erste Signal verarbeitet, und einen zweiten Signalprozessor umfasst, der das zweite Signal verarbeitet.

3. Empfänger nach Anspruch 1 oder 2, wobei die Kommunikationseinheit (130) ein Bluetooth-Modul (131) umfasst.

4. Empfänger nach einem der vorhergehenden Ansprüche, der ferner eine Eingabeeinheit (150) umfasst, über die ein Befehl von einem Benutzer eingegeben wird,
wobei durch den Befehl ein dem zweiten Signal entsprechender zweiter Kanal ausgewählt wird, über den die Signalempfangseinheit (110) das zweite Signal empfängt, und die Steuerung die Signalverarbeitungseinheit (120) und die Kommunikationseinheit (130) so steuert, dass das zu der externen Vorrichtung (200) zu übertragende zweite Signal verarbeitet wird.

5. Empfänger nach Anspruch 4,
wobei eine Steuerung (140) so eingerichtet ist, dass sie die Signalverarbeitungseinheit (120) so steuert, dass diese einen Auswahlbildschirm auf der Anzeige erzeugt,
wobei der Auswahlbildschirm angibt, dass der zweite Kanal dem zweiten Signal entspricht, und
wobei es der Auswahlbildschirm dem Benutzer ermöglicht, den Befehl zum Auswählen des zweiten Kanals für das Empfangen des zweiten Signals einzugeben.

6. Empfänger nach Anspruch 4 oder 5, der ferner eine Speichereinheit (160) umfasst, die Informationen zu dem zweiten Kanal speichert, wobei das zweite Signal über den zweiten Kanal bereitgestellt wird.

7. Empfänger nach Anspruch 6, wobei der zweite Kanal durch den Befehl unter Bezugnahme auf die in der Speichereinheit (160) gespeicherten Informationen zu dem zweiten Kanal ausgewählt wird.

8. Empfänger nach einem der vorhergehenden Ansprüche,
wobei eine Steuerung (140) so eingerichtet ist, dass sie als Reaktion auf einen Eingabebefehl die erste Empfangseinheit so steuert, dass diese einen ersten Kanal zum Empfangen des ersten Signals auswählt, oder die zweite Empfangseinheit so steuert, dass diese einen zweiten Kanal zum Empfangen des zweiten Signals auswählt.

9. Verfahren zum Steuern eines Rundsendungsempfängers (100) mit einer Anzeigeeinheit, die ein Bild anzeigt, und einer Tonausgabeeinheit, die einen Ton ausgibt, wobei das Verfahren Folgendes umfasst:
Empfangen eines ersten und eines zweiten rundgesendeten Signals,
derartiges Verarbeiten eines Videosignals und eines ersten Tonsignals, die in dem ersten rundgesendeten Signal enthalten sind, dass die Anzeigeeinheit das Bild auf der Grundlage des verarbeiteten Videosignals anzeigt und die Tonausgabeeinheit den Ton auf der Grundlage des verarbeiteten ersten Tonsignals ausgibt, und Verarbeiten eines zweiten Tonsignals, das in dem zweiten rundgesendeten Signal enthalten ist, und Bereitstellen des verarbeiteten zweiten Tonsignals für die Kommunikationseinheit (130) zum Übertragen zu der externen Vorrichtung (200), wenn das zweite rundgesendete Signal nur ein Tonsignal enthält, während das Videosignal und das erste Tonsignal, die in dem ersten rundgesendeten Signal enthalten sind, verarbeitet werden, das Bild auf der Anzeigeeinheit angezeigt und der Ton von der Tonausgabeeinheit ausgegeben wird.

10. Steuerverfahren nach Anspruch 9, wobei das zweite Signal über ein Bluetooth-Modul (131) zu der externen Vorrichtung übertragen wird.

11. Steuerverfahren nach Anspruch 9, das ferner das Empfangen eines Befehls von einem Benutzer umfasst, wobei ein dem zweiten Signal entsprechender zweiter Kanal durch den Befehl zum Empfangen des zweiten Signals ausgewählt und das zweite Signal verarbeitet und zu der externen Vorrichtung übertragen wird.

12. Steuerverfahren nach Anspruch 11, das ferner das Speichern von Informationen zu dem zweiten Kanal umfasst, wobei das zweite Signal über den zweiten Kanal bereitgestellt wird.

13. Steuerverfahren nach Anspruch 11 oder 12, das ferner das Erzeugen eines Auswahlbildschirms auf der Anzeige (B10) der Rundsendungsempfangsvorrichtung umfasst,
wobei der Auswahlbildschirm angibt, dass der zweite Kanal dem zweiten Signal entspricht, und
wobei es der Auswahlbildschirm dem Benutzer ermöglicht, den Befehl zum Auswählen des zweiten Kanals für das Empfangen des zweiten Signals einzugeben.

14. Steuerverfahren nach Anspruch 13, wobei der zweite Kanal durch den Befehl unter Bezugnahme auf die gespeicherten Informationen zu dem zweiten Kanal ausgewählt wird.

## Revendications

1. Récepteur de diffusion (100), comprenant :
une unité d'affichage qui affiche une image ;
une unité d'émission sonore qui émet un son ;
une unité de réception de signal (110) qui comprend une première unité de réception (111) pour la réception d'un premier signal de diffusion et une seconde unité de réception (112) pour la réception d'un second signal de diffusion ;
une unité de communication (130) conçue pour communiquer avec un dispositif externe ; et
une unité de traitement de signal (120) conçue pour traiter un signal vidéo et un premier signal sonore qui sont contenus dans le premier signal de diffusion, de sorte que l'unité d'affichage affiche l'image sur la base du signal vidéo traité et que l'unité d'émission sonore émette le son sur la base du premier signal sonore traité, et pour traiter un second signal sonore qui est contenu dans le second signal de diffusion et fournir le second signal sonore traité à l'unité de communication (130) en vue de sa transmission au dispositif externe (200) si le second signal de diffusion inclut uniquement un signal sonore, pendant que le signal vidéo et le premier signal sonore qui sont contenus dans le premier signal de diffusion sont traités, que l'image est affichée sur l'unité d'affichage, et que le son est émis par l'unité d'émission sonore.

2. Récepteur selon la revendication 1, dans lequel l'unité de traitement de signal (120) comprend une première unité de traitement de signal qui traite le premier signal et une seconde unité de traitement de signal qui traite le second signal.

3. Récepteur selon la revendication 1 ou 2, dans lequel l'unité de communication (130) comprend un module Bluetooth (131).

4. Récepteur selon l'une quelconque des revendications précédentes, comprenant en outre une unité d'entrée (150) par l'intermédiaire de laquelle une commande d'un utilisateur est entrée,
la commande faisant en sorte qu'un second canal correspondant au second signal soit sélectionné pour que l'unité de réception de signal (110) reçoive le second signal, que le contrôleur contrôle l'unité de traitement de signal (120) et que l'unité de communication (130) traite le second signal à transmettre au dispositif externe (200).

5. Récepteur selon la revendication 4,
dans lequel un contrôleur (140) est conçu pour contrôler l'unité de traitement de signal (120) pour qu'elle génère un écran de sélection sur l'unité d'affichage,
l'écran de sélection indiquant que le second canal correspond au second signal, et
l'écran de sélection permettant à l'utilisateur d'entrer la commande de sélection du second canal pour recevoir le second signal.

6. Récepteur selon la revendication 4 ou 5, comprenant en outre une unité de stockage (160) qui stocke une information relative au second canal, le second signal étant fourni par l'intermédiaire du second canal.

7. Récepteur selon la revendication 6, dans lequel le second canal est sélectionné par la commande en référence à l'information relative au second canal stockée dans l'unité de stockage (160).

8. Récepteur selon l'une quelconque des revendications précédentes,
dans lequel en réponse à une commande d'entrée, un contrôleur (140) est conçu pour contrôler la première unité de réception pour qu'elle sélectionne un premier canal pour recevoir le premier signal, ou la seconde unité de réception pour qu'elle sélectionne un second canal pour recevoir le second signal.

9. Procédé de contrôle d'un récepteur de diffusion (100) comportant une unité d'affichage qui affiche une image et une unité d'émission sonore qui émet un son, le procédé consistant à :
recevoir un premier signal de diffusion et un second signal de diffusion ;
traiter un signal vidéo et un premier signal sonore qui sont contenus dans le premier signal de diffusion, de sorte que l'unité d'affichage affiche l'image sur la base du signal vidéo traité et que l'unité d'émission sonore émette le son sur la base du premier signal sonore traité, et traiter un second signal sonore qui est contenu dans le second signal de diffusion et fournir le second signal sonore traité à l'unité de communication (130) en vue de sa transmission au dispositif externe (200) si le second signal de diffusion inclut uniquement un signal sonore, pendant que le signal vidéo et le premier signal sonore qui sont contenus dans le premier signal de diffusion sont traités, que l'image est affichée sur l'unité d'affichage, et que le son est émis par l'unité d'émission sonore.

10. Procédé de contrôle selon la revendication 9, dans lequel le second signal est transmis au dispositif externe par l'intermédiaire d'un module Bluetooth (131).

11. Procédé de contrôle selon la revendication 9, consistant en outre à recevoir une commande d'un utilisateur, un second canal correspondant au second signal étant sélectionné par la commande pour recevoir le second signal, et le second signal étant traité et transmis au dispositif externe.

12. Procédé de contrôle selon la revendication 11, consistant en outre à stocker une information relative au second canal, le second signal étant fourni par l'intermédiaire du second canal.

13. Procédé de contrôle selon la revendication 11 ou 12, consistant en outre à générer un écran de sélection sur l'unité d'affichage (B10) de l'appareil de réception de diffusion,
l'écran de sélection indiquant que le second canal correspond au second signal, et
l'écran de sélection permettant à l'utilisateur d'entrer la commande de sélection du second canal pour recevoir le second signal.

14. Procédé de contrôle selon la revendication 13, dans lequel le second canal est sélectionné par la commande en référence à l'information stockée relative au second canal.
